# EUROPÄISCHE PATENTANMELDUNG

(11) **EP 3 276 552 A1**
(43) Veröffentlichungstag der Anmeldung: **31.01.2018**
(21) Anmeldenummer: 17182779.3
(22) Anmeldetag: 24.07.2017
(51) Int. Cl.: G06Q 10/08

(54) **RFID-KOMMUNIKATIONSSYSTEM ZUR ELEKTRONISCHEN BESTANDSÜBERWACHUNG EINES DURCHLAUFLAGERS**

(30) Priorität: 26.07.2016 DE 102016008942
(71) Anmelder: Intellion AG, 9016 St. Gallen (CH)
(72) Erfinder: Dierkes, Markus, 9008 St. Gallen (CH); Eisen, Stephan, 8832 Wollerau (CH)
(74) Vertreter: Lohmanns, Bernard

(57) **Zusammenfassung**

Die Erfindung betrifft ein RFID-Kommunikationssystem zur elektronischen Bestandsüberwachung eines Durchlauflagers (7), beispielsweise eines Durchlaufregals, aufweisend wenigstens eine erste und eine zweite RFID-Antenne zum drahtlosen Senden und Empfangen von Daten und einen an einem entlang einer Lagerstrecke (8) des Durchlauflagers (7) bewegbaren Gegenstand (12), beispielsweise einem Behälter, angebrachten RFID-Transponder (13), der mindestens eine Kennung des Gegenstands (12) elektronisch speichert, wobei die erste RFID-Antenne an einem Eingabebereich (10) und die zweite RFID-Antenne an einem Ausgabebereich (11) der Lagerstrecke (8) ortsfest angebracht sind, um den Gegenstand (12) anhand der Kennung des RFID-Transponders (13) zu erfassen. Erfindungsgemäß ist jede RFID-Antenne zu deren Ansteuerung jeweils mit einer ortsfest an der Lagerstrecke (8) angeordneten elektronischen Steuereinrichtung (9) elektrisch verbunden, wobei die Steuereinrichtungen (9) jeweils neben einem RFID-Kommunikationsmodul zur drahtlosen Datenübertragung mit dem RFID-Transponder (13) wenigstens ein weiteres Drahtloskommunikationsmodul zur drahtlosen Datenübertragung mit wenigstens einem weiteren Kommunikationspartner (2, 9) aufweisen.

## Beschreibung

Die vorliegende Erfindung betrifft ein RFID-Kommunikationssystem (Radiofrequenz-Identifikations-Kommunikationssystem) zur elektronischen Bestandsüberwachung eines Durchlauflagers, beispielsweise eines Durchlaufregals, nach dem Oberbegriff des Anspruchs 1.

Derartige Durchlauflager, zum Beispiel Durchlaufregale oder auch Schrägregale, sind in der Industrie für die Lagerung und Bereitstellung diverser Materialien sehr weit verbreitet, zum Beispiel in der Produktion oder Montage, der Automobilindustrie und in Industriebetrieben mit Serienfertigungen.

Durchlauflager sind Lagereinrichtungen, die zum Beispiel mittels geführter Rollwagen auf Durchlaufbahnen oder mittels Behältern oder Paletten auf Rollbahnen mit Waren bestückt werden.

Durchlaufregale haben den Vorteil, dass sie für verschiedene Materialbehälter angepasst werden können (Breite der "Rutschen") und hinsichtlich der Anzahl der Rutschen und der Anzahl der Behälter pro Rutsche unterschiedlich dimensioniert werden können (Tiefe der Rutschen pro Regal). Da die Behälter in den Durchlaufregalen gewöhnlich auf Rollen gelagert sind, können bei Entnahme eines Behälters an der Ausgabeseite des Regals die dahinterstehenden Behälter mit dem entsprechenden Material automatisch nachrücken. Dadurch kann eine einfache Entnahme durch den Fertigungsmitarbeiter vorne am Regal (Ausgabebereich) erfolgen, während eine einfache Beladung bzw. Nachschubsteuerung auf der Rückseite des Regals (Eingabebereich) erfolgen kann.

RFID-Kommunikationssysteme für die Lager- und/oder Produktionslogistik umfassen in der Regel ein RFID-Gerät zum Auslesen und/oder Beschreiben eines RFID-Transponders, der an den Gegenständen, Produkten, Behältern bzw. Paletten angebracht ist. An das RFID-Gerät ist dafür eine Antenne elektrisch angeschlossen, die entweder fest in das RFID-Gerät integriert ist oder als externe Antenne genutzt wird. Zur Kommunikation mit dem Transponder erzeugt die Antenne des RFID-Geräts ein elektromagnetisches Feld im Radiofrequenzbereich, das in einer Antenne des Transponders eine Spannung induziert. Damit können einerseits Daten zwischen dem RFID-Gerät und dem RFID-Transponder übertragen werden, andererseits wird dadurch der Transponder mit Energie versorgt.

Gegenwärtige Lagerungssysteme nutzen RFID-Kommunikation, um an der Ausgabeseite von Durchlauflagern die Entnahme von Waren zu registrieren und damit den Warenbestand zu erfassen und zu kontrollieren. Hierzu werden die mit einem RFID-Transponder versehenen Waren beim Verlassen des Durchlauflagers an einem stationären RFID-Gerät mit Antenne vorbeigeführt, um die im Transponder gespeicherte Kennung auszulesen. Auf diese Weise wird der Warenausgang automatisch erfasst und in einem Logistiksystem entsprechend verbucht.

Außerdem ist es bekannt, die RFID-Kommunikation auch auf der Eingabeseite des Durchlauflagers zu nutzen und die Eingabe von Waren in das Durchlauflager zu registrieren, indem die mit RFID-Transpondern versehenen Waren beim Eingeben in das Durchlauflager an einem stationären RFID-Gerät mit Antenne vorbeigeführt werden, um ebenfalls die in dem Transponder gespeicherte Kennung auszulesen. Auf diese Weise wird auch der Wareneingang automatisch erfasst und in einem Logistiksystem entsprechend verbucht, so dass durch das Logistiksystem der aktuelle Bestand an Waren im entsprechenden Durchlauflager bestimmt werden kann. Ein derartiges Durchlauflager ist beispielsweise in der DE 10 2010 029 996 A1 beschrieben.

Nachteilig bei derartigen RFID-Kommunikationssystemen ist allerdings deren relativ aufwändige Montage an Durchlauflagern, zum Beispiel aufgrund einer erforderlichen Verkabelung für die Stromversorgung, sowie deren ungenügende Anpassungsfähigkeit an Durchlauflagern unterschiedlicher Dimensionen (Tiefe und/oder Breite der Rutschen), zum Beispiel für eine nachträgliche Montage des RFID-Kommunikationssystems an einem bestehenden Durchlauflager (Retrofit). So schränkt eine Verkabelung zum Beispiel die Flexibilität des Einsatzorts des Durchlauflagers erheblich ein, denn wenn das Durchlauflager, beispielsweise ein Durchlaufregal, verschoben werden soll, ist eine Neuverlegung der Kabel in jedem Fall erforderlich. Auch eine zum Beispiel während des Betriebs erforderliche Änderung der Konfiguration des Durchlauflagers, beispielsweise der Tiefe und/oder Breite der Rutschen, ist bei einer vorhandenen Verkabelung nur mit erhöhtem Aufwand durchführbar.

Vor diesem Hintergrund liegt der vorliegenden Erfindung die Aufgabe zugrunde, ein RFID-Kommunikationssystem zur elektronischen Bestandsüberwachung eines Durchlauflagers, zum Beispiel eines Durchlaufregals, mit einer gegenüber dem aufgezeigten Stand der Technik vereinfachten Montage- und Einsatzfähigkeit bereitzustellen. So soll das RFID-Kommunikationssystem außerdem einfach zu implementieren und für den Betrieb einfach zu initialisieren/konfigurieren sein. Insbesondere sollen auch bestehende Durchlauflager, zum Beispiel Durchlaufregale, ohne großen Aufwand mit dem RFID-Kommunikationssystem nachrüstbar sein, wobei eine Anpassung an unterschiedliche Standorte des Durchlauflagers, der Tiefen und/oder Breiten der Rutschen flexibel möglich sein soll, sogar während des Betriebs, zum Beispiel wenn die Produktion umgebaut wird, das heißt das Durchlaufregal verschoben wird oder die Konfiguration der Regalplätze geändert wird und dergleichen.

Diese Aufgabe wird durch ein RFID-Kommunikationssystem mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß weist ein RFID-Kommunikationssystem zur elektronischen Bestandsüberwachung eines Durchlauflagers, beispielsweise eines Durchlaufregals, wenigstens eine erste und eine zweite RFID-Antenne zum drahtlosen Senden und Empfangen von Daten und einen an einem entlang einer Lagerstrecke des Durchlauflagers bewegbaren Gegenstand, beispielsweise einem Behälter, angebrachten RFID-Transponder auf, der mindestens eine Kennung des Gegenstands elektronisch speichert, wobei die erste RFID-Antenne an einem Eingabebereich und die zweite RFID-Antenne an einem Ausgabebereich der Lagerstrecke ortsfest angebracht sind, um den Gegenstand anhand der Kennung des RFID-Transponders zu erfassen. Hierunter ist eine Identifizierung des Gegenstands, zum Beispiel des Behälters, einschließlich dessen Inhalts (Menge und Art der Waren) zu verstehen. Gemäß der Erfindung ist jede RFID-Antenne zu deren Ansteuerung jeweils mit einer ortsfest an der Lagerstrecke angeordneten elektronischen Steuereinrichtung elektrisch verbunden, wobei die Steuereinrichtungen jeweils neben einem RFID-Kommunikationsmodul zur drahtlosen Datenübertragung mit dem RFID-Transponder wenigstens ein weiteres Drahtloskommunikationsmodul zur drahtlosen Datenübertragung mit wenigstens einem weiteren Kommunikationspartner aufweisen. Auf diese Weise kann auf eine Verkabelung der Steuereinrichtungen mit dem weiteren Kommunikationspartner verzichtet werden, was eine erhebliche Vereinfachung der Montage des RFID-Kommunikationsmoduls am Durchlauflager bedeutet. Selbst bei Durchlauflagern, insbesondere Durchlaufregalen, mit unterschiedlichen Tiefen und/oder Breiten der einzelnen Lagerstrecken bzw. Rutschen, ist eine (auch nachträgliche) Montage des RFID-Kommunikationsmoduls einfach und ohne großen Aufwand möglich. Auch eine Änderung des Standorts des Durchlauflagers oder dessen Konfiguration (Tiefe/Breite der Rutschen) ist während des Betriebs ohne großen Aufwand möglich, da sich das erfindungsgemäße RFID-Kommunikationssystem flexibel hieran anpassen lässt.

Die Erfassung der in dem RFID-Transponder gespeicherten Kennung kann in an sich bekannter Weise mit 13,56 MHz oder 868 MHz erfolgen.

Der wenigstens eine weitere Kommunikationspartner der Steuereinrichtungen kann ein übergeordnetes Logistiksystem sein, zum Beispiel ein Produktions- oder Lagerlogistiksystem, ERP (Enterprise Resource Planning), MES (Manufacturing Execution System) und dergleichen, an das die von den RFID-Antennen bzw. den Steuereinrichtungen erfassten Kennungen der RFID-Transponder der Gegenstände, zum Beispiel Behälter oder Paletten, im Eingabe- und Ausgabebereich des Durchlauflagers drahtlos übermittelt werden. Auf diese Weise ist eine genaue Bestandserfassung der in dem Durchlauflager bzw. auf der mit dem RFID-Kommunikationssystem erfassten Lagerstrecke/Rutsche gelagerten Gegenstände bzw. Waren jederzeit möglich.

Der wenigstens eine weitere Kommunikationspartner kann gemäß einer weiteren vorteilhaften Ausgestaltung der Erfindung auch die derselben Lagerstrecke des Durchlauflagers zugeordnete weitere Steuereinrichtung sein. So können beispielsweise die dem Eingabebereich und dem Ausgabebereich zugeordneten Steuereinrichtungen die jeweiligen Kennungen der erfassten Gegenstände drahtlos miteinander austauschen, so dass wenigstens eine dieser Steuereinrichtungen den genauen Bestand der auf der Lagerstrecke gelagerten Gegenstände bzw. Waren erfassen kann. Auf diese Weise kann der Warenbestand der entsprechenden Lagerstrecke bereits direkt am Durchlauflager erfasst werden, der anschließend gegebenenfalls an ein übergeordnetes Logistiksystem drahtlos weitergeleitet werden kann.

Die drahtlose Kommunikation zwischen der Steuereinrichtung und dem übergeordneten Logistiksystem und/oder mit der anderen Steuereinrichtung kann vorzugsweise über eine Low-Power-Funktechnologie, beispielsweise Bluetooth-Low-Energy (BLE), erfolgen. Dementsprechend kann das Drahtloskommunikationsmodul ein Low-Power-Drahtloskommunikationsmodul wie beispielsweise ein BLE-Kommunikationsmodul sein. Auf diese Weise kann der Stromverbrauch des RFID-Kommunikationssystems reduziert werden.

Eine noch weitere vorteilhafte Ausgestaltung der Erfindung sieht vor, dass wenigstens ein Präsenzsensor zur Erfassung der Präsenz des Gegenstands, beispielsweise eines Behälters oder einer Palette, im Ein- und/oder Ausgabebereich der Lagerstrecke vorgesehen ist, wobei der wenigstens eine Präsenzsensor mit der wenigstens einen Steuereinrichtung elektronisch verbunden ist. Hierbei können beispielsweise ein erster Präsenzsensor im Eingabebereich und ein zweiter Präsenzsensor im Ausgabebereich der Lagerstrecke des Durchlauflagers ortsfest angeordnet und der jeweiligen RFID-Antenne zugeordnet sein. Besonders bevorzugt ist hierbei die mit dem jeweiligen Präsenzsensor verbundene Steuereinrichtung dazu eingerichtet, ein Lesen des RFID-Transponders mittels der entsprechenden RFID-Antenne erst dann zu aktivieren, wenn die Präsenz des Gegenstands von dem jeweiligen Präsenzsensor erfasst ist. So lassen sich der Stromverbrauch und damit die Betriebskosten des RFID-Kommunikationssystems auf ein Minimum reduzieren.

Der Präsenzsensor kann beispielsweise ein optischer Sensor sein, wobei dann der RFID-Transponder bevorzugt einen im Vergleich zur Oberfläche des Gegenstands, auf der er angebracht ist, hohen optischen Kontrast aufweist, der von dem Präsenzsensor erfassbar ist.

Gemäß einer noch weiteren vorteilhaften Ausgestaltung der Erfindung ist zur elektrischen Speisung der Steuereinrichtung wenigstens eine Batterie vorgesehen. Somit lässt sich das ganze erfindungsgemäße RFID-Kommunikationssystem vollkommen autark am Durchlauflager betreiben. Somit kann auch der Standort des Durchlauflagers unabhängig von einer externen Stromversorgung gewählt und/oder sogar während des Betriebs des RFID-Kommunikationssystems geändert werden.

Eine noch weitere vorteilhafte Ausgestaltung der Erfindung sieht vor, dass die Steuereinrichtung und die mit dieser elektronisch verbundenen Komponenten, beispielsweise RFID-Antenne(n) und/oder Präsenzsensor(en) und/oder Batterie(n), in einem gemeinsamen Gehäuse aufgenommen sind. Da die Steuereinrichtung demgemäß eine Einheit mit den mit dieser elektronisch verbundenen Komponenten bildet, lässt sich die Montage des RFID-Kommunikationssystems am Durchlauflager weiter vereinfachen.

Eine noch einfacherer Montage des RFID-Kommunikationssystems kann erreicht werden, wenn die Steuereinrichtungen und die mit diesen elektronisch verbundenen Komponenten, beispielsweise RFID-Antenne(n) und/oder Präsenzsensor(en), auf einer entlang der Lagerstrecke befestigbaren, gemeinsamen Trägerschiene, beispielsweise einer die Rutschen eines Durchlaufregals voneinander separierenden Trennschiene, angeordnet sind.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine Systemübersicht eines Logistiksystems mit einem RFID-Kommunikationssystem gemäß der Erfindung und
- Fig. 2: das RFID-Kommunikationssystem aus Fig. 1 an einer Lagerstrecke eines Durchlaufregals.

In den unterschiedlichen Figuren sind hinsichtlich ihrer Funktion gleichwertige Teile stets mit denselben Bezugszeichen versehen, so dass diese in der Regel auch nur einmal beschrieben werden.

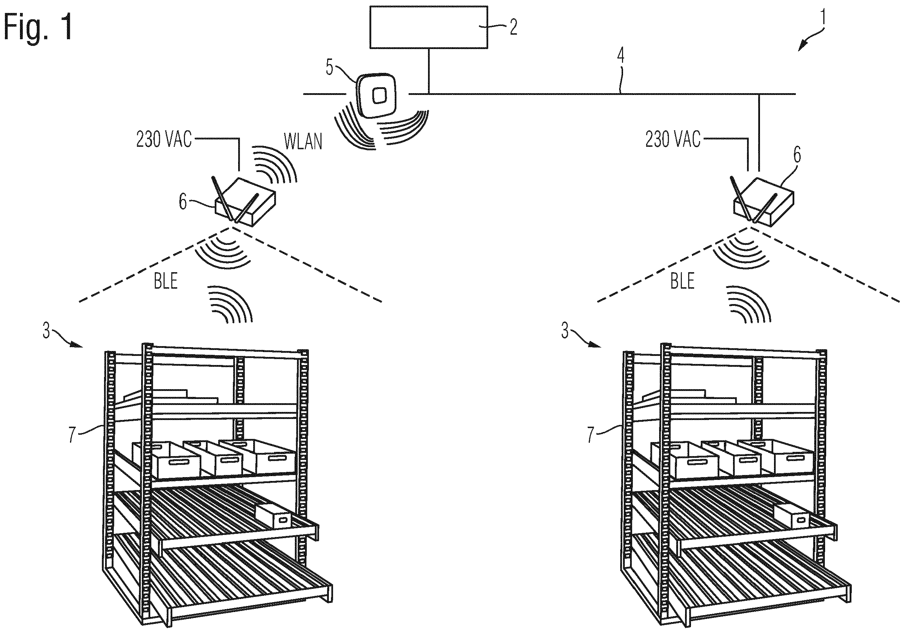

Fig. 1 stellt eine Systemübersicht 1 eines Logistiksystems 2, zum Beispiel eines Produktions- oder Lagerlogistiksystems, ERP, MES und dergleichen dar, das ein RFID-Kommunikationssystem 3 gemäß der Erfindung umfasst. Wie in Fig. 1 zu erkennen ist, kommuniziert das Logistiksystem 2 drahtlos mit dem RFID-Kommunikationssystem 3. Hierzu sind in einem Ethernet- oder WLAN-Netzwerk 4 entsprechende Funkstationen 5 (WLAN-Funkstation) und 6 (Ethernet-/WLAN-BLE-Konverter) zusammengeschlossen. Wie Fig. 1 zu entnehmen ist, bindet die WLAN-Funkstation 5 den in der Darstellung linken WLAN-BLE-Konverter 6 mittels WLAN in das Netzwerk 4 ein, wohingegen der rechte Ethernet-BLE-Konverter 6 drahtgebunden mit dem Netzwerk 4 verbunden ist. Die Ethernet-/WLAN-BLE-Konverter 6 kommunizieren mittels BLE mit dem RFID-Kommunikationssystem 3. Als Kommunikationsstandard zur Ankopplung des RFID-Kommunikationssystems 3 an das Logistiksystem 2 wurde bei dem hier gezeigten Ausführungsbeispiel der BLE-Standard verwendet. Andere Funktechnologien, insbesondere Low-Power-Funktechnologien, sind ebenfalls denkbar.

Wie in Fig. 1 zu erkennen ist, ist das RFID-Kommunikationssystem 3 bei dem gezeigten Ausführungsbeispiel an einem Durchlaufregal 7 angebracht. Das Durchlaufregal 7 umfasst hierbei in an sich bekannter Weise mehrere nebeneinander und übereinander angeordnete Rutschen, die jeweils eine Lagerstrecke des Durchlaufregals 7 bilden und mit je einem RFID-Kommunikationssystem 3 ausgestattet sind, um den Warenbestand pro Lagerstrecke/Rutsche erfassen zu können.

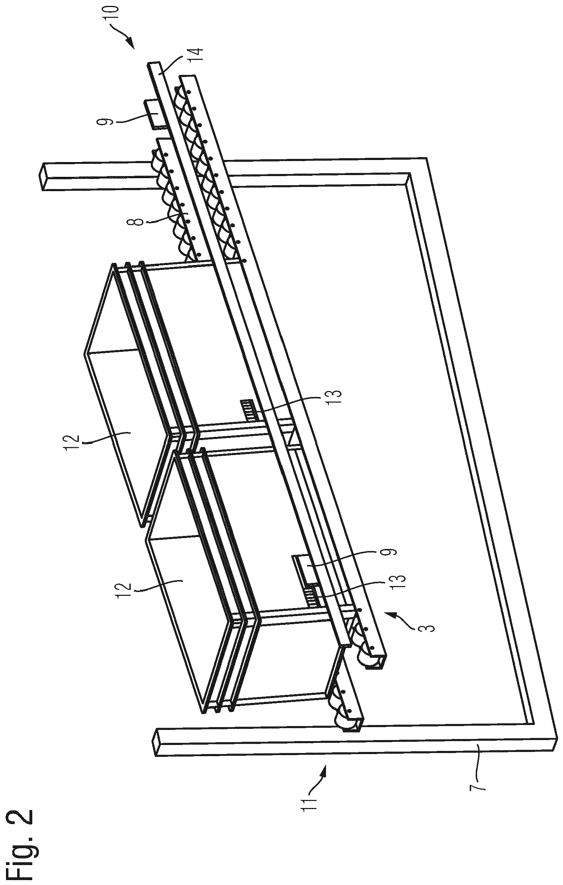

Fig. 2 stellt das RFID-Kommunikationssystem 3 aus Fig. 1 beispielhaft für eine Lagerstrecke bzw. Rutsche 8 des Durchlaufregals 7 dar. Die Rutsche 8 ist bei dem dargestellten Durchlaufregal 7 in Form einer Rollbahn ausgebildet. Das RFID-Kommunikationssystem 3 umfasst zwei in jeweils einem eigenen Gehäuse aufgenommene elektronische Steuereinrichtungen 9, von denen eine in einem Eingabebereich 10 des Durchlaufregals 7 und die andere in einem Ausgabebereich 11 des Durchlaufregals 7 angeordnet ist. In dem Gehäuse der jeweiligen Steuereinrichtung 9 sind ferner je eine RFID-Antenne (nicht dargestellt) und ein optischer Präsenzsensor (ebenfalls nicht dargestellt) angeordnet. Die Steuereinrichtungen 9, die entsprechenden RFID-Antennen sowie die jeweiligen Präsenzsensoren werden jeweils von einer Batterie (nicht dargestellt) elektrisch gespeist.

Auf den auf der Rutsche 8 bzw. entlang der Lagerstrecke 8 bewegbaren Gegenständen 12, die hier in Form von Behältern 12 ausgebildet sind, ist jeweils ein RFID-Transponder 13 zur Speicherung wenigstens einer Kennung des entsprechenden Behälters 12 angebracht. Mittels der RFID-Antenne ist die jeweilige Steuereinrichtung 9 in der Lage, die in dem RFID-Transponder 13 gespeicherte Kennung in an sich bekannter Weise auszulesen und somit den Gegenstand 12 bzw. dessen Inhalt zu erfassen. Um den Energiebedarf des RFID-Kommunikationssystems 3 so gering wie möglich zu halten, weist der RFID-Transponder 13 eine Eigenschaft auf, die einen starken optischen Kontrast zum Behälter 12 darstellt, so dass der optische Präsenzsensor einen Kontrastwechsel (zum Beispiel hell-dunkel) beim Vorbeirutschen des Behälters 12 an der RFID-Antenne der jeweiligen Steuereinrichtung 9 erkennen kann. Erst in diesem Fall steuert die Steuereinrichtung 9 die entsprechenden RFID-Antennen an, um die Kennung des RFID-Transponders zu erfassen.

Des Weiteren sind die beiden Steuereinrichtungen 9 bei dem gezeigten Ausführungsbeispiel des RFID-Kommunikationssystems 3 dazu eingerichtet, miteinander drahtlos zu kommunizieren, so dass zum Beispiel die im Ausgabebereich 11 angeordnete Steuereinrichtung 9 sowohl Informationen über den Warenausgang von der Lagerstrecke 8 im Ausgebebereich 11 als auch über die im Eingabebereich 10 angeordnete Steuereinrichtungen 9 Informationen über die in die Lagerstrecke 8 im Eingabebereich 10 eingegebenen Waren erhalten kann. Auf diese Weise kann zum Beispiel die im Ausgabebereich 11 angeordnete Steuereinrichtung 9 den aktuellen, auf der Lagerstrecke 8 gelagerten Warenbestand ermitteln und an das übergeordnete Logistiksystem 2 drahtlos übermitteln. Zur drahtlosen Kommunikation der Steuereinrichtungen 9 untereinander und/oder zur drahtlosen Kommunikation der Steuereinrichtung(en) 9 mit dem Logistiksystem 2 weist jede Steuereinrichtung 9 neben dem RFID-Kommunikationsmodul wenigstens noch ein weiteres (Low-Power-) Drahtloskommunikationsmodul, zum Beispiel ein BLE-Kommunikationsmodul, auf. Zur drahtlosen Kommunikation der Steuereinrichtungen 9 untereinander und mit dem übergeordneten Logistiksystem 2 kann dasselbe (Low-Power-) Drahtloskommunikationsmodul wie in dem hier dargestellten Beispiel verwendet werden.

Wie Fig. 2 weiterhin zu entnehmen ist, sind die beiden Steuereinrichtungen 9 bei dem gezeigten RFID-Kommunikationssystem 3 auf einer gemeinsamen Trägerschiene 14 angebracht, die eine herkömmliche, zwischen den einzelnen, benachbarten Rutschen 8 gewöhnlich vorhandene Trennschiene ist.

Das vorstehend beschriebene erfindungsgemäße RFID-Kommunikationssystem zur elektronischen Bestandsüberwachung eines Durchlauflagers, beispielsweise eines Durchlaufregals, ist nicht auf die hierin offenbarte Ausführungsform beschränkt, sondern umfasst auch gleich wirkende weitere Ausführungsformen.

In bevorzugter Ausführung wird das erfindungsgemäße RFID-Kommunikationssystem zur elektronischen Bestandsüberwachung an einem Durchlauflager, insbesondere einem Durchlaufregal, verwendet.

### Bezugszeichenliste:

- 1: Systemübersicht
- 2: Logistiksystem
- 3: RFID-Kommunikationssystem
- 4: Ethernet- oder WLAN-Netzwerk
- 5: WLAN-Funkstation
- 6: Ethernet-/WLAN-BLE-Konverter
- 7: Durchlaufregal
- 8: Lagerstrecke, Rutsche
- 9: Elektronische Steuereinrichtung
- 10: Eingabebereich
- 11: Ausgabebereich
- 12: Gegenstand, Behälter
- 13: RFID-Transponder
- 14: Trägerschiene

## Patentansprüche

1. RFID-Kommunikationssystem zur elektronischen Bestandsüberwachung eines Durchlauflagers (7), beispielsweise eines Durchlaufregals, aufweisend wenigstens eine erste und eine zweite RFID-Antenne zum drahtlosen Senden und Empfangen von Daten und einen an einem entlang einer Lagerstrecke (8) des Durchlauflagers (7) bewegbaren Gegenstand (12), beispielsweise einem Behälter, angebrachten RFID-Transponder (13), der mindestens eine Kennung des Gegenstands (12) elektronisch speichert, wobei die erste RFID-Antenne an einem Eingabebereich (10) und die zweite RFID-Antenne an einem Ausgabebereich (11) der Lagerstrecke (8) ortsfest angebracht sind, um den Gegenstand (12) anhand der Kennung des RFID-Transponders (13) zu erfassen,
**dadurch gekennzeichnet, dass**
jede RFID-Antenne zu deren Ansteuerung jeweils mit einer ortsfest an der Lagerstrecke (8) angeordneten elektronischen Steuereinrichtung (9) elektrisch verbunden ist, wobei die Steuereinrichtungen (9) jeweils neben einem RFID-Kommunikationsmodul zur drahtlosen Datenübertragung mit dem RFID-Transponder (13) wenigstens ein weiteres Drahtloskommunikationsmodul zur drahtlosen Datenübertragung mit wenigstens einem weiteren Kommunikationspartner (2, 9) aufweisen.

2. RFID-Kommunikationssystem nach Anspruch 1,
**dadurch gekennzeichnet, dass**
der weitere Kommunikationspartner ein übergeordnetes Logistiksystem (2) ist.

3. RFID-Kommunikationssystem nach Anspruch 1 oder 2,
**dadurch gekennzeichnet, dass**
der weitere Kommunikationspartner die derselben Lagerstrecke (8) zugeordnete weitere Steuereinrichtung (9) ist.

4. RFID-Kommunikationssystem nach dem vorhergehenden Anspruch,
**dadurch gekennzeichnet, dass**
wenigstens eine Steuereinrichtung (9) derselben Lagerstrecke (8) dazu eingerichtet ist, den aktuell in der Lagerstrecke (8) gelagerten Bestand an Gegenständen (12) zu erfassen.

5. RFID-Kommunikationssystem nach einem der vorhergehenden Ansprüche,
**dadurch gekennzeichnet, dass**
wenigstens ein Präsenzsensor zur Erfassung der Präsenz des Gegenstands (12) im Ein- (10) und/oder Ausgabebereich (11) der Lagerstrecke (8) vorgesehen ist, wobei der wenigstens eine Präsenzsensor mit der wenigstens einen Steuereinrichtung (9) elektronisch verbunden ist.

6. RFID-Kommunikationssystem nach dem vorhergehenden Anspruch,
**dadurch gekennzeichnet, dass**
ein erster Präsenzsensor im Eingabebereich (10) und ein zweiter Präsenzsensor im Ausgabebereich (11) ortsfest angeordnet und der jeweiligen RFID-Antenne zugeordnet sind, wobei die mit dem jeweiligen Präsenzsensor verbundene Steuereinrichtung (9) dazu eingerichtet ist, ein Lesen des RFID-Transponders (13) mittels der entsprechenden RFID-Antenne erst dann zu aktivieren, wenn die Präsenz des Gegenstands (12) von dem jeweiligen Präsenzsensor erfasst ist.

7. RFID-Kommunikationssystem nach einem der beiden vorhergehenden Ansprüche,
**dadurch gekennzeichnet, dass**
der Präsenzsensor ein optischer Sensor ist und der RFID-Transponder (13) einen im Vergleich zur Oberfläche des Gegenstands, auf der er angebracht ist, hohen optischen Kontrast aufweist, der von dem Präsenzsensor erfassbar ist.

8. RFID-Kommunikationssystem nach einem der vorhergehenden Ansprüche,
**dadurch gekennzeichnet, dass**
zur elektrischen Speisung der Steuereinrichtung (9) wenigstens eine Batterie vorgesehen ist.

9. RFID-Kommunikationssystem nach einem der vorhergehenden Ansprüche,
**dadurch gekennzeichnet, dass**
die Steuereinrichtung (9) und die mit dieser elektronisch verbundenen Komponenten, beispielsweise RFID-Antenne(n) und/oder Präsenzsensor(en) und/oder Batterie(n), in einem gemeinsamen Gehäuse aufgenommen sind.

10. RFID-Kommunikationssystem nach einem der vorhergehenden Ansprüche,
**dadurch gekennzeichnet, dass**
die Steuereinrichtungen (9) und die mit diesen elektronisch verbundenen Komponenten, beispielsweise RFID-Antenne(n) und/oder Präsenzsensor(en), auf einer entlang der Lagerstrecke (8) befestigbaren, gemeinsamen Trägerschiene (14) angeordnet sind.
